# EUROPÄISCHE PATENTSCHRIFT

(11) **EP 2 927 791 B1**
(45) Veröffentlichungstag und Bekanntmachung des Hinweises auf die Patenterteilung: **08.05.2019**
(21) Anmeldenummer: 15158648.4
(22) Anmeldetag: 11.03.2015
(51) Int. Cl.: G06F 3/0486

(54) **VERFAHREN UND VORRICHTUNG ZUM BEREITSTELLEN EINER GRAPHISCHEN BENUTZERSCHNITTSTELLE IN EINEM FAHRZEUG**
METHOD AND DEVICE FOR PROVIDING A GRAPHICAL USER INTERFACE IN A VEHICLE
PROCÉDÉ ET DISPOSITIF DE PRÉPARATION D'UNE INTERFACE UTILISATEUR GRAPHIQUE DANS UN VÉHICULE

(30) Priorität: 31.03.2014 DE 102014206047
(43) Veröffentlichungstag der Anmeldung: 07.10.2015
(73) Patentinhaber: Volkswagen Aktiengesellschaft, 38440 Wolfsburg (DE)
(72) Erfinder: Wild, Holger, 10179 Berlin (DE); Czelnik, Mark Peter, 38440 Wolfsburg (DE)

(56) Entgegenhaltungen:
- DE-A1-102008 028 392
- DE-A1-102009 036 371
- DE-A1-102012 009 021

## Beschreibung

Die vorliegende Erfindung betrifft ein Verfahren und eine Vorrichtung zum Bereitstellen einer graphischen Benutzerschnittstelle in einem Fahrzeug.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge häufig Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Weiterhin verfügen moderne Fahrzeuge in der Regel über mehrere Anzeigeflächen, die im Fahrzeug verteilt angeordnet sind. Dabei können die Anzeigen, die auf diesen Anzeigeflächen angezeigt werden, in der Regel nicht separat für jede Anzeigefläche einzeln konfiguriert werden.

Die WO 2012/110021 A2 beschreibt ein Verfahren zum Anzeigen von Betriebszuständen von Fahrzeugeinrichtungen. Es werden erfasste Betriebsparameter auf einer im Innenraum des Fahrzeugs angeordneten Anzeigefläche angezeigt. Dabei werden auf einer Innenfläche in einer bogenförmigen Skala Anzeigeelemente angezeigt, wobei die Innenfläche in einen ersten und einen zweiten Bereich unterteilt ist. Anzeigeelemente in einem bedienbaren Zustand werden in dem ersten Bereich und Anzeigeelemente in einem nicht bedienbaren Zustand werden im zweiten Bereich angezeigt. Dabei können auch Anzeigeelemente von einer zweiten Anzeigefläche auf der ersten Anzeigefläche zur Anzeige gebracht werden.

Die DE 10 2011 077 429 A1 beschreibt ein System mit zwei Benutzervorrichtungen. Dabei können Informationen, die auf einer ersten Benutzervorrichtung angezeigt werden, einer zweiten Benutzervorrichtung zur Verfügung gestellt werden.

Schließlich beschreibt die WO 2011/042355 ein Verfahren zur Integration einer Komponente in ein Informationssystem eines Fahrzeugs. Dabei wird die Integration der Komponente bezüglich der Eingabe und/oder Ausgabe von Informationen durch den Nutzer personalisiert bezüglich eines Benutzers der Komponente vorgenommen.

Es ist Aufgabe der vorliegenden Erfindung, ein Verfahren und eine Vorrichtung bereitzustellen, mit denen auf intuitive und schnelle Art und Weise im Fahrzeug Anzeigen für unterschiedlichen Benutzervorrichtungen konfiguriert werden können.

Diese Aufgabe wird durch ein Verfahren nach Anspruch 1 und eine Vorrichtung nach Anspruch 10 gelöst, wobei die Merkmale des Oberbegriffs des Anspruchs 1 bzw. 10 sowohl aus dem Dokument DE 10 2009 036 371 A1 als auch aus dem Dokument DE 10 2008 028 392 A1 bekannt sind. Vorteilhafte Ausgestaltungen und Weiterbildungen sind Gegenstände der abhängigen Ansprüche.

Bei dem erfindungsgemäßen Verfahren wird zumindest ein erstes graphisches Objekt in einem ersten Bereich auf einer ersten Anzeigefläche einer ersten Benutzervorrichtung angezeigt. Weiterhin wird eine Bedienaktion für das erste graphische Objekt erfasst, mit der das erste graphische Objekt mit einem zweiten Bereich der ersten Anzeigefläche verknüpft wird. Der zweite Bereich ist dabei einer zweiten Benutzervorrichtung zugeordnet. Nach der Bedienaktion wird das graphische Objekt auf einer zweiten Anzeigefläche angezeigt, wobei die zweite Anzeigefläche der zweiten Benutzervorrichtung zugeordnet ist. Durch das erfindungsgemäße Verfahren wird dem Nutzer eine Möglichkeit bereitgestellt, schnell und einfach graphische Objekt auf einer Anzeigefläche im Fahrzeug auch auf einer anderen Anzeigefläche im Fahrzeug zur Anzeige zu bringen.

Die erste Benutzervorrichtung kann beispielsweise ein in der Mittelkonsole des Fahrzeugs angeordnetes Infotainmentsystem sein. Das Infotainmentsystem ist besonders gut als erste Benutzervorrichtung geeignet, da es sowohl vom Fahrer wie auch vom Beifahrer gleichermaßen gut bedient werden kann und von allen Fahrzeuginsassen eingesehen werden kann. Die zweite Benutzervorrichtung kann beispielsweise das Kombinationsinstrument sein, welches in der Regel zwischen der Geschwindigkeits- und der Drehzahlanzeige eine Anzeigefläche aufweist, in welcher Anzeigen zur Navigation oder zum Fahrzeugzustand angezeigt werden.

Insbesondere wird der zweite Bereich graphisch dargestellt, wenn die Bedienaktion für das erste graphische Objekt erfasst wurde. Ist die Bedienaktion eine Wischgeste, mit welcher das graphische Objekt in den zweiten Bereich gewischt wird, so wird dem Nutzer dargestellt, wohin er ein Betätigungselement führen muss, um das graphische Objekt mit dem zweiten Bereich zu verknüpfen. Dabei kann der zweite Bereich dem ersten Bereich überlagert dargestellt werden. Der erste Bereich kann auch verkleinert dargestellt werden, wenn der zweite Bereich dargestellt wird.

Weiterhin wird, wenn die Bedienaktion erfasst wurde, ein zweites graphisches Objekt auf der ersten Anzeigefläche angezeigt, welches das erste graphische Objekt repräsentiert und welches durch die Bedienaktion in den zweiten Bereich verschoben wird, während das erste graphische Objekt seine ursprüngliche Position auf der ersten Anzeigefläche beibehält. Nach der Bedienaktion wird das erste graphische Objekt auf der ersten und auf der zweiten Anzeigefläche angezeigt. Das erste graphische Objekt wird durch die Bedienaktion also von der ersten Anzeigefläche auf die zweite Anzeigefläche kopiert. Eine Bedienung der Funktion, welche den graphischen Objekten zugeordnet ist, ist dann über beide Anzeigeflächen möglich.

In einer Ausgestaltung wird das erste graphische Objekt dadurch mit dem zweiten Bereich verknüpft, dass es von seiner ursprünglichen Position auf der ersten Anzeigefläche in den zweiten Bereich verschoben wird. Dabei wird es nach der Bedienaktion nicht mehr auf der ersten Anzeigefläche angezeigt. Das erste graphische Objekt wird also von der ersten Anzeigefläche entfernt und dort nicht mehr angezeigt. Das erste graphische Objekt wird beispielsweise durch eine Drag-and-Drop-Geste von seiner ursprünglichen Position in den zweiten Bereich verschoben und dadurch von der ersten Anzeigefläche auf die zweite Anzeigefläche geschoben.

Insbesondere wird das erste graphische Objekt auf der ersten Anzeigefläche in einem ersten Anzeigemodus und auf der zweiten Anzeigefläche in einem zweiten Anzeigemodus angezeigt. Dies erlaubt vorteilhafterweise, dass die graphischen Objekte an Form und Größe der jeweiligen Anzeigefläche angepasst werden können.

Bevorzugt ist das erste graphische Objekt ein Widget-Objekt, in welchem Informationen zu einer bestimmten Fahrzeugfunktion angezeigt werden, wobei das Widget-Objekt im zweiten Anzeigemodus weniger Informationen zu der Fahrzeugfunktion aufweist als im ersten Anzeigemodus. Dies ist insbesondere dann vorteilhaft, wenn die zweite Anzeigefläche eine geringere Größe als die erste Anzeigefläche aufweist.

Unter einem *Widget-Objekt* wird im Sinne der Erfindung ein Objekt verstanden, welches graphisch auf der Anzeigefläche dargestellt wird und welches einer Anwendung zugeordnet ist, die z. B. von einer Fahrzeugeinrichtung ausgeführt wird. Ein Widget-Objekt kann insbesondere in einem kleinen Bereich der Anzeigefläche Informationen einer Fahrzeugeinrichtung anzeigen, die laufend aktualisiert werden. Beispielsweise können von dem Widget-Objekt Routeninformationen des Navigationssystems, aktuelle Meldungen zum Wetter, zum Straßenzustand und zum Verkehrszustand angezeigt werden sowie Informationen zu Multimedia-Einrichtungen des Fahrzeugs. Die Widget-Objekte werden insbesondere unabhängig vom weiteren Anzeigeinhalt der Anzeigefläche dargestellt. Ist das Anzeigefenster ein Widget-Objekt, können auch die graphischen Objekte in dem Anzeigefenster Widget-Objekte sein. Dabei hat der Nutzer über das Anzeigefenster Zugang zu anderen Widget-Objekten.

Insbesondere ist das erste graphische Objekt ein Anzeige- und/oder Bedienelement einer Hauptanzeige der ersten Benutzervorrichtung, die angezeigt wird, wenn das Fahrzeug gestartet wird. Auch die zweite Benutzervorrichtung kann eine Hauptanzeige aufweisen, wobei das erste graphische Objekt durch die Bedienaktion der Hauptanzeige der zweiten Benutzervorrichtung hinzugefügt wird. Eine Hauptanzeige wird auch als Homescreen bezeichnet. Der Homescreen ist nach Belieben von dem Nutzer des Fahrzeugs konfigurierbar. Dabei kann der Nutzer sowohl die Anordnung der graphischen Objekte und/oder Widget-Objekte, die Fahrzeugfunktionen, welche den graphischen Objekten und/oder Widget-Objekten zugeordnet sind, wie auch die Anzahl der angezeigten graphischen Objekte und/oder Widget-Objekte selbst bestimmen. Vorteilhafterweise kann der Homescreen für jede Benutzervorrichtung unterschiedlich konfiguriert werden.

Dies ist insbesondere deswegen vorteilhaft, da jede Hauptanzeige unterschiedlichen Anforderungen genügen muss. So ist es für die Anzeige auf der Anzeigefläche im Kombinationsinstrument wichtig, dass Informationen angezeigt werden, die für den Fahrer während der Fahrt von Interesse sind. Auf der Anzeigefläche des Infotainmentsystems in der Mittelkonsole können hingegen Informationen angezeigt werden, die auch für andere Fahrzeuginsassen, wie den Beifahrer und Mitfahrer auf der Rückbank, von Interesse sind.

In einer weiteren Ausgestaltung wird eine dritte Benutzervorrichtung mit der ersten Benutzervorrichtung gekoppelt, wobei die dritte Benutzervorrichtung eine dritte Anzeigefläche aufweist, auf der zumindest ein weiteres graphisches Objekt angezeigt wird. Nachdem die dritte Benutzervorrichtung mit der ersten Benutzervorrichtung gekoppelt wurde, wird das weitere graphische Objekt auf der ersten Anzeigefläche angezeigt. Das weitere graphische Objekt wird durch die Bedienaktion mit dem zweiten Bereich verknüpft und das weitere graphische Objekt wird nach der Bedienaktion auf der zweiten Anzeigefläche angezeigt. Die dritte Benutzervorrichtung kann dabei insbesondere ein externes Gerät sein, welches der Nutzer von außen mit in das Fahrzeug bringt. Beispielsweise kann dies ein Smartphone oder ein Tablet-Computer des Nutzers sein. Durch das Verfahren können Funktionen des Smartphones oder des Tablet-Computers über jede beliebige Benutzervorrichtung im Fahrzeug bedient werden.

In einer anderen Ausgestaltung ist das weitere graphische Objekt einer Funktion der dritten Benutzervorrichtung zugeordnet. Die Funktion wird dann über die erste Anzeigefläche der ersten Benutzervorrichtung bedient. Insbesondere kann auch das weitere graphische Objekt dann auf die Anzeigefläche der zweiten Benutzervorrichtung verschoben oder kopiert werden. Durch die Kopplung der dritten Benutzervorrichtung können dem Fahrzeug Funktionen zur Verfügung gestellt werden, über die es ansonsten nicht verfügen würde. Hat der Nutzer beispielsweise aus Kostengründen auf ein fahrzeuginternes Navigationssystem verzichtet, kann er über die dritte Benutzervorrichtung eine Navigationsfunktion im Fahrzeug ausführen. Weiterhin können dann die Benutzervorrichtungen des Fahrzeugs dazu verwendet werden, dem Nutzer die extern hinzugefügte Fahrzeugfunktion auszuführen und anzuzeigen.

Weiterhin kann das weitere graphische Objekt auf der ersten Anzeigefläche in dem ersten Anzeigemodus, auf der zweiten Anzeigefläche in dem zweiten Anzeigemodus und auf der dritten Anzeigefläche in einem dritten Anzeigemodus angezeigt werden, wobei der erste, zweite und dritte Anzeigemodus über die erste Anzeigefläche konfiguriert werden.

Die erste Benutzervorrichtung kann also durch die Kopplung uneingeschränkten Zugriff auf die dritte Benutzervorrichtung erhalten. Die dritte Anzeigefläche kann demnach über die erste Anzeigefläche konfiguriert werden. Eine Verbindung, die dies ermöglicht, wird als "Mirror Link" bezeichnet. Weiterhin muss die dritte Benutzervorrichtung dazu "Mirror Link"-kompatibel sein.

Ferner betrifft die Erfindung eine Vorrichtung zum Bereitstellen einer graphischen Benutzerschnittstelle. Die Vorrichtung umfasst eine erste Benutzervorrichtung mit einer ersten Anzeigefläche, auf welcher in einem ersten Bereich zumindest ein erstes graphisches Objekt anzeigbar ist. Weiterhin umfasst die Vorrichtung eine zweite Benutzervorrichtung mit einer zweiten Anzeigefläche. Ferner umfasst die Vorrichtung eine Erfassungseinheit, mittels welcher eine Bedienaktion erfassbar ist, mit der das erste graphische Objekt mit einem zweiten Bereich der ersten Anzeigefläche verknüpfbar ist, wobei der zweite Bereich der zweiten Anzeigefläche zugeordnet ist. Mittels einer Steuereinheit ist die zweite Anzeigefläche derart ansteuerbar, dass das erste graphische Objekt nach der Bedienaktion auf der zweiten Anzeigefläche anzeigbar ist. Die erfindungsgemäße Vorrichtung ist insbesondere zum Ausführen des erfindungsgemäßen Verfahrens geeignet und weist daher alle Vorteile des Verfahrens auf.

Die erfindungsgemäße Vorrichtung ist insbesondere so ausgestaltet, dass sie die vorstehend beschriebenen Verfahrensschritte teilweise oder vollständig ausführen kann.

Insbesondere umfasst die Vorrichtung weitere Benutzervorrichtungen, wobei auf der ersten Anzeigefläche für jede Benutzervorrichtung ein Bereich anzeigbar ist, wobei das erste graphische Objekt durch die Bedienaktion mit jedem Bereich verknüpfbar ist.

Das Fahrzeug kann neben dem Infotainmentsystem und der Anzeigefläche im Kombinationsinstrument noch weitere Anzeigeflächen aufweisen. Beispielsweise kann das Fahrzeug eine Head-Up-Display aufweisen, welches eine Anzeige in der Windschutzscheibe des Fahrzeugs, insbesondere vor dem Fahrer, ermöglicht. Weiterhin kann das Fahrzeug auch Anzeigeflächen in den Kopfstützen der Fahrzeugsitze aufweisen. Dadurch wird ein sogenanntes "Rear Seat Entertainment"-System bereitgestellt, also ein System zur Unterhaltung der Fahrzeuginsassen auf der Rückbank. Auch dem Beifahrer kann eine eigene Anzeigefläche zugeordnet sein. Um eine möglichst einfache Konfiguration der Anzeige der Vielzahl der möglichen Anzeigeflächen in einem Fahrzeug zu ermöglichen, kann die Konfiguration über das Infotainmentsystem vorgenommen werden.

Weiterhin kann das erste graphische Objekt für jede Benutzervorrichtung eigens konfiguriert werden. Es können dann mehrere Anzeigemodi definiert werden, die je nach Größe der Anzeigefläche den Benutzervorrichtungen zugewiesen werden können. Dies erlaubt vorteilhafterweise eine bequeme Art und Weise die Anzeige auf den unterschiedlichen Benutzervorrichtungen zu konfigurieren. Insbesondere sind in einem Fahrzeug Anzeigeflächen angeordnet, zu denen der Nutzer nur schwer Zugang erhält. Dies ist beispielsweise für die Anzeigefläche im Kombinationsinstrument der Fall, die im Allgemeinen nur über Bedienelemente in einem Multifunktionslenkrad zugänglich ist.

Weiterhin kann die Vorrichtung eine Schnittstelle umfassen, mittels welcher eine dritte Benutzervorrichtung mit der Vorrichtung koppelbar ist, wobei der ersten Anzeigefläche über die dritte Benutzervorrichtung zumindest ein weiteres graphisches Objekt bereitstellbar ist.

In einer weiteren Ausgestaltung umfasst die Erfassungseinheit eine berührungsempfindliche Oberfläche, welche auf der ersten Anzeigefläche angeordnet ist. Die erste Bedienvorrichtung stellt dann insbesondere einen sogenannten Touch-Screen bereit. Die berührungsempfindliche Oberfläche erfasst dann Bedienaktionen, welche ein Nutzer über Berührungen auf der Anzeigefläche berührungsempfindlichen Oberfläche tätigt.

Die Vorrichtung stellt insbesondere ein Managementsystem bereit, mit dem graphische Objekte, beispielsweise Widget-Objekte, jeder Komponente, die dem Managementsystem zugeordnet ist, zur Verfügung gestellt werden können. Der Ausführungsort der Funktion, die dem graphischen Objekt und/oder Widget-Objekt zugeordnet ist, ändert sich dadurch nicht. Vielmehr ändert sich lediglich der Ort, an dem Informationen zu der Funktion angezeigt und/oder die Funktion bedient werden kann.

Ferner betrifft die Erfindung ein Fahrzeug, das eine erfindungsgemäße Vorrichtung umfasst.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figur 2: zeigt eine Anordnung der erfindungsgemäßen Vorrichtung im Innenraum des Fahrzeugs,
- Figur 3: zeigt eine Hauptanzeige auf einer Anzeigefläche einer ersten Benutzervorrichtung,
- Figur 4: zeigt eine Anzeige auf einer Anzeigefläche im Kombinationsinstrument,
- Figuren 5 und 6: zeigen Beispiele einer Anzeige auf der ersten Anzeigefläche, wie sie von einem Ausführungsbeispiel des erfindungsgemäßen Verfahrens erzeugt werden,
- Figuren 7a und 7b: zeigen Beispiele der Ausgestaltung eines graphischen Objekts auf der ersten Anzeigefläche,
- Figur 7c: zeigt ein Beispiel einer Ausgestaltung desselben graphischen Objekts aus den Figuren 7a und 7b auf der zweiten Anzeigefläche,
- Figur 8: zeigt eine Integration des graphischen Objekts aus Figur 7c in die zweite Anzeigefläche,
- Figur 9: zeigt eine Anzeige wie sie von einem weiteren Ausführungsbeispiel des erfindungsgemäßen Verfahrens erzeugt wird,
- Figuren 10a bis 10c: zeigen Anzeigen auf der ersten Anzeigefläche wie sie von einem weiteren Ausführungsbeispiel des erfindungsgemäßen Verfahrens erzeugt werden, und
- Figuren 11a bis 11e: zeigen weitere Ausführungsformen eines graphischen Objekts auf verschiedenen Anzeigeflächen.

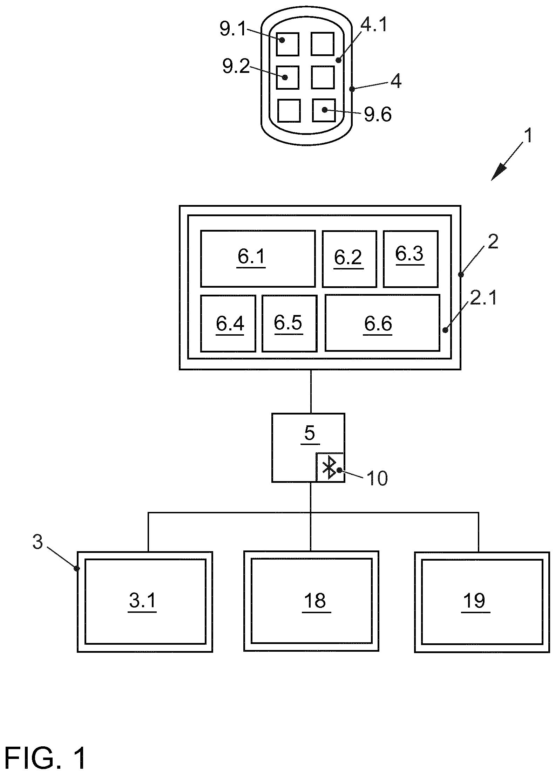

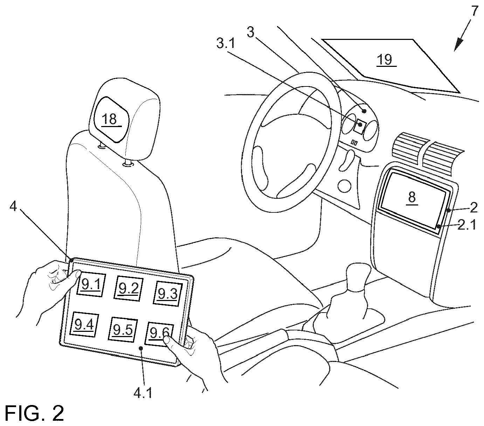

Mit Bezug zu den Figuren 1 und 2 wird ein Ausführungsbeispiel der erfindungsgemäßen Vorrichtung 1 sowie eine Anordnung der erfindungsgemäßen Vorrichtung 1 in einem Fahrzeug 7 erläutert.

Die Vorrichtung 1 umfasst eine erste Benutzervorrichtung 2, die insbesondere eine im Fahrzeug 7 angeordnete erste Anzeigevorrichtung umfasst. Die erste Benutzervorrichtung 2 weist eine erste Anzeigefläche 2.1 auf, auf welcher mehrere graphische Objekte 6.1 bis 6.6 anzeigbar sind. Die graphischen Objekte 6.1 bis 6.6 sind dabei insbesondere Widget-Objekte. Die Widget-Objekte 6.1 bis 6.6 unterstützen den Nutzer bei der Steuerung von Einrichtungen des Fahrzeugs 7. Dabei ist jedes der Widget-Objekte 6.1 bis 6.6 einer Fahrzeugfunktion zugeordnet.

Auf der Anzeigefläche 2.1 ist weiterhin eine Erfassungseinheit 8 angeordnet, welche als berührungsempfindliche Oberfläche ausgestaltet ist. Zusätzlich kann die Vorrichtung 1 auch eine Annäherungserfassungseinheit umfassen, über welche Annäherungen eines Betätigungselements an die Anzeigefläche 2.1 erfasst werden können. Die erste Benutzervorrichtung 2 ist in der Mittelkonsole des Fahrzeugs 7 angeordnet und stellt beispielsweise das Infotainmentsystem des Fahrzeugs 7 dar.

Weiterhin weist die Vorrichtung 1 eine zweite Benutzervorrichtung 3 auf, welche das Kombinationsinstrument des Fahrzeugs 7 ist. Das Kombinationsinstrument 3 umfasst ebenso eine Anzeigefläche 3.1. Die Anzeigefläche 3.1 ist dabei getrennt von der Anzeigefläche 2.1 vorgesehen.

Die Vorrichtung 1 weist noch weitere Benutzervorrichtungen 18 und 19 auf. Die Benutzervorrichtung 18 ist eine in einer Kopfstütze angeordnete Anzeigevorrichtung. Diese dient dazu, den Fahrzeuginsassen auf der Rückbank des Fahrzeugs 7 Unterhaltung zu bieten. Dabei kann in jeder Kopfstütze eine Anzeigevorrichtung angeordnet sein. Die Anzeigevorrichtungen in den Kopfstützen werden auch als "Rear Seat Entertainment" RSE bezeichnet.

Die Benutzervorrichtung 19 ist ein Head-Up-Display, welches eine Anzeigefläche auf der Fahrerseite des Fahrzeugs 7 in der Windschutzscheibe erzeugen kann.

Weiterhin umfasst die Vorrichtung 1 eine Schnittstelle 10, über welche eine dritte Benutzervorrichtung 4 mit der Vorrichtung 1 gekoppelt werden kann. Die dritte Benutzervorrichtung 4 ist dabei beispielsweise ein Smartphone oder ein Tablet-Computer eines Fahrzeuginsassen. Die Schnittstelle 10 kann beispielsweise als Bluetooth-Schnittstelle ausgestaltet sein. Auch die dritte Benutzervorrichtung 4 weist eine Bluetooth-Schnittstelle auf, so dass sie mit der ersten Benutzervorrichtung 2 gekoppelt werden kann. Durch die Kopplung erhält der Nutzer über die erste Benutzervorrichtung 2 Zugriff auf die dritte Benutzervorrichtung 4. Weiterhin weist auch die dritte Benutzervorrichtung 4 eine Anzeigefläche 4.1 auf, auf welcher graphische Objekte 9.1 bis 9.6, welche ebenso Widget-Objekte sein können, angezeigt werden.

Die erste Benutzervorrichtung 2 ist über eine Steuereinheit 5 mit der zweiten Benutzervorrichtung 3 und den weiteren Benutzervorrichtungen 18 und 19 verbunden. Weiterhin ist die Schnittstelle 10 in der Steuereinheit 5 integriert, so dass die Anzeigeflächen aller Benutzervorrichtungen 2, 3, 4, 18 und 19 über die Steuereinheit 5 angesteuert werden können.

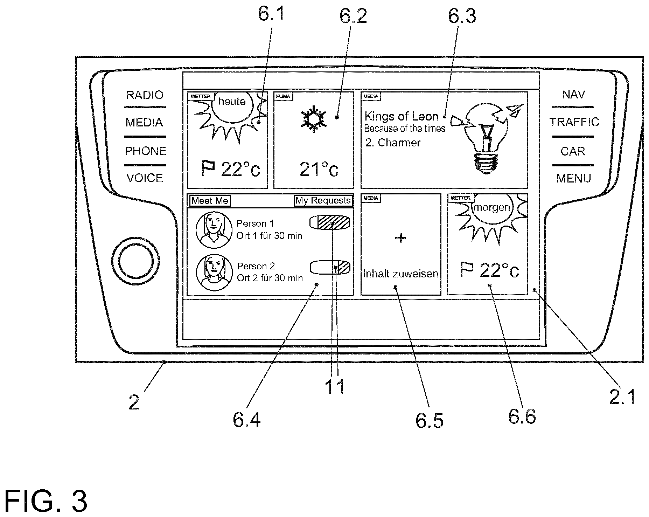

Mit Bezug zu Figur 3 wird ein Beispiel für eine Hauptanzeige, die auch als Homescreen bezeichnet wird, auf der ersten Anzeigefläche 2.1, also der Anzeigefläche 2.1 der ersten Benutzervorrichtung 2, zu Beginn des erfindungsgemäßen Verfahrens erläutert. Der Homescreen wird immer dann angezeigt, wenn erfasst wurde, dass das Fahrzeug 7 und somit die erste Benutzervorrichtung 2 gestartet wurde.

Auf der Anzeigefläche 2.1 werden im Homescreen sechs Widget-Objekte 6.1 bis 6.6 in einem Vollbildmodus auf der Anzeigefläche 2.1 angezeigt. Dabei stellt der Vollbildmodus den ersten Bereich der Anzeigefläche 2.1 dar. Die Widget-Objekte 6.1 und 6.6 zeigen dabei Daten zur Wetterlage an. Das Widget-Objekt 6.2 zeigt Daten zur Klimaeinstellung innerhalb des Fahrzeugs 7. Das Widget-Objekt 6.3 ist der Mediafunktion des Fahrzeugs 7 zugeordnet und zeigt den momentan abgespielten Musiktitel an. Das Widget-Objekt 6.4 ist der Kommunikationsfunktion des Fahrzeugs 7 zugeordnet. Es zeigt eine "Meet Me" Anwendung an, bei der dem Nutzer angezeigt wird, welcher Kontakt aus der Kontaktliste des Telefonbuchs sich an welchem Ort aufhält und für wie lange. Weiterhin wird für jeden aufgelisteten Kontakt jeweils ein Balken 11 angezeigt, der die verbleibende Zeit, die sich der Kontakt an dem Ort aufhält, anzeigt.

Dem Widget-Objekt 6.5 ist kein Inhalt zugewiesen. Der Nutzer kann dem Widget-Objekt 6.5 nach Belieben einen Inhalt zuweisen.

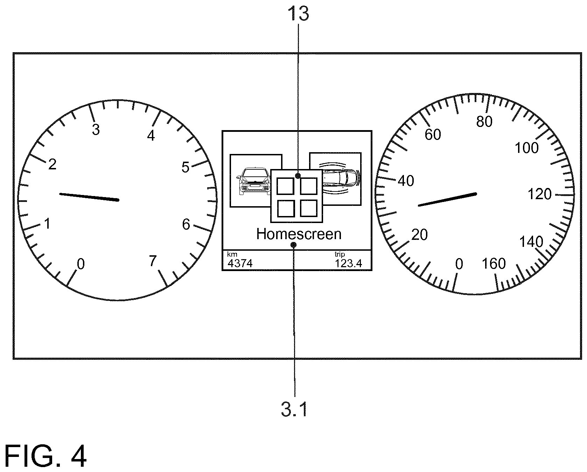

Mit Bezug zu Figur 4 wird ein Beispiel der Anzeige auf der Anzeigefläche 3.1 des Kombinationsinstruments 3 des Fahrzeugs 7 gezeigt.

Die Anzeigefläche 3.1 befindet sich dabei im Kombinationsinstrument 3 zwischen einer Geschwindigkeits- und Drehzahlanzeige. Dabei ist der Zugriff auf die Anzeigefläche durch den Nutzer im Kombinationsinstrument 3 aufgrund ihrer Lage in Fahrtrichtung vor dem Lenkrad des Fahrzeugs 7 beschränkt. Beispielsweise kann der Nutzer die Anzeige auf der Anzeigefläche 3.1 des Kombinationsinstruments 3 über ein Multifunktionslenkrad steuern. Die Möglichkeiten sind dabei insbesondere von der Anzahl der Bedienelemente, die im Multifunktionslenkrad verbaut sind, beschränkt.

Im vorliegenden Beispiel kann sich der Nutzer über die erste Benutzervorrichtung 2 einen Homescreen 13 für das Kombinationsinstrument 3 konfigurieren. Dieser wird dann in einer Übersichtsanzeige oder auch in einer Vollbildanzeige auf der Anzeigefläche 3.1 des Kombinationsinstruments 3 angezeigt.

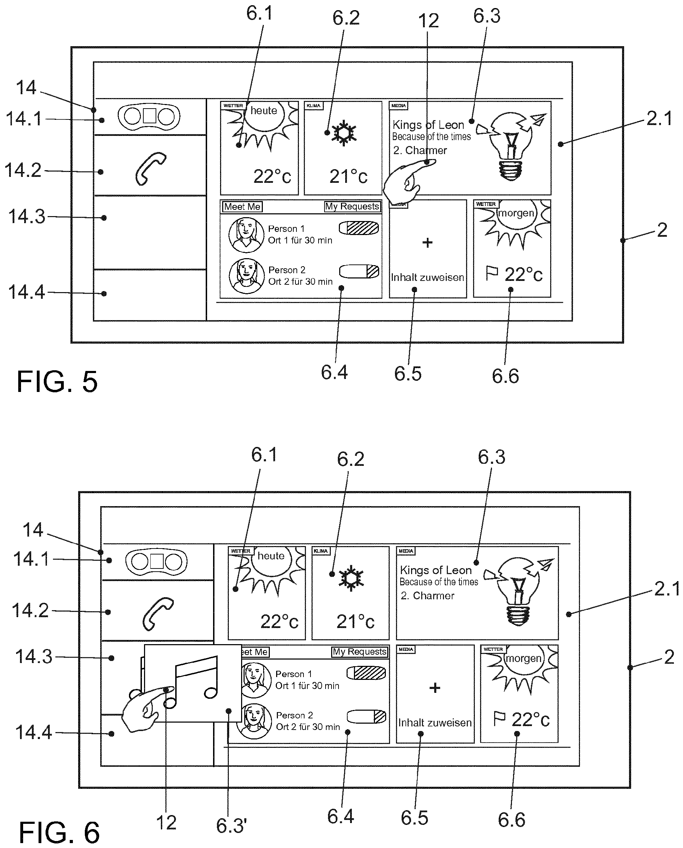

Mit Bezug zu den Figuren 5 und 6 werden weitere Details des Ausführungsbeispiels der erfindungsgemäßen Vorrichtung sowie ein erstes Ausführungsbeispiel des erfindungsgemäßen Verfahrens erläutert.

Es wird zunächst erfasst, dass das Fahrzeug 7 gestartet wurde. Die Hauptanzeige der Figur 3 wird dann automatisch auf der Anzeigefläche 2.1 der ersten Benutzervorrichtung 2 angezeigt.

Der Nutzer berührt die berührungsempfindliche Oberfläche, also die Erfassungseinheit 8, mit einer Fingerspitze 12 an einem Berührungspunkt an einer Stelle des Widget-Objekts 6.3. Die Berührung wird erfasst.

Daraufhin wird ein zweiter Bereich 14 auf der Anzeigefläche 2.1 dargestellt, mit welchem das Widget-Objekt 6.3 verknüpft werden kann. Der zweite Bereich 14 ist dabei wiederum in Teilbereiche 14.1 bis 14.4 unterteilt. In dem Teilbereich 14.1 wird ein graphisches Objekt dargestellt, welches das Kombinationsinstrument 3 repräsentiert. Dadurch wird dem Nutzer verdeutlicht, dass er durch eine Bedienaktion das Widget-Objekt 6.3 dem Homescreen 13 des Kombinationsinstruments 3 hinzufügen kann.

Dabei wird der erste Bereich verkleinert dargestellt. Alternativ kann der zweite Bereich 14 den Vollbildmodus auch überlappen.

Das Widget-Objekt 6.3 kann durch eine Drag-and-Drop Bedienaktion mit dem zweiten Bereich 14 verknüpft werden. Dazu zieht der Nutzer das Widget-Objekt 6.3 z.B. in den Teilbereich 14.3.

Dabei wird das Widget-Objekt 6.3 jedoch nicht von seiner ursprünglichen Position auf der ersten Anzeigefläche 2.1 entfernt. Das Widget-Objekt 6.3 soll weiterhin auf dem Homescreen der ersten Anzeigefläche 2.1 angezeigt werden. Vielmehr wird durch die Berührung, welche einem langen Drücken entspricht, ein weiteres graphisches Objekt 6.3' auf der Anzeigefläche 2.1 angezeigt, welches das Widget-Objekt 6.3 repräsentiert und welches in den Teilbereich 14.3 gezogen wird.

Befindet sich das graphische Objekt 6.3' in dem Teilbereich 14.3, lässt der Nutzer das graphische Objekt 6.3' los. Dadurch wird das Widget-Objekt 6.3 dem Homescreen 13 des Kombinationsinstruments 3 hinzugefügt. Dies wiederum bedeutet, dass der Nutzer die dem Widget-Objekt 6.3 zugeordnete Funktion auch über das Kombinationsinstrument 3 bedienen kann.

Alternativ kann jedoch auch tatsächlich das Widget-Objekt 6.3 von seiner ursprünglichen Position in den Teilbereich 14.3 gezogen werden. Dann wird das Widget-Objekt 6.3 nicht mehr auf der ersten Anzeigefläche 2.1 angezeigt.

Das Widget-Objekt 6.3, welches dem Homescreen 13 des Kombinationsinstruments 3hinzugefügt wurde, kann aufgrund des beschränkten Platzes auf der Anzeigefläche 3.1 für das Kombinationsinstrument 3 eine andere Ausgestaltung aufweisen als für die Anzeigefläche 2.1.

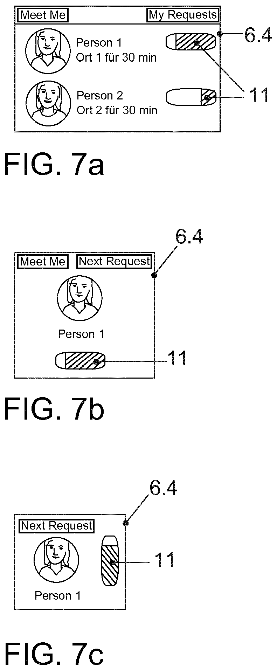

Mit Bezug zu den Figuren 7a bis 7c wird am Beispiel des Widget-Objekts 6.4 erläutert, wie die unterschiedliche Ausgestaltung der Widget-Objekte für die unterschiedlichen Homescreens aussehen kann.

Die Figuren 7a und 7b zeigen dabei Beispiele des Widget-Objekts 6.4, wie es auf der ersten Anzeigefläche 2.1 dargestellt werden kann. Die Größe des Widget-Objekts 6.4 und die Fülle der darin angezeigten Information richtet sich dabei nach den Vorgaben des Nutzers. Das in Figur 7a gezeigte Beispiel des Widget-Objekts 6.4 zeigt dabei mehr Informationen und ist daher größer ausgestaltet als das in Figur 7b gezeigte Beispiel.

Für die Anzeigefläche 3.1 im Kombinationsinstrument 3 ist ein Widget-Objekt 6.4 mit kleinen Ausmaßen und daher mit entsprechen wenig Informationsgehalt von Vorteil, da die Anzeigefläche 3.1 des Kombinationsinstruments 3 in der Regel selbst kleine Ausmaße bereitstellt. Dabei wird in der Regel zugunsten der Übersichtlichkeit auf Informationsfülle verzichtet. Ein solches Widget-Objekt 6.4 ist in Figur 7c dargestellt.

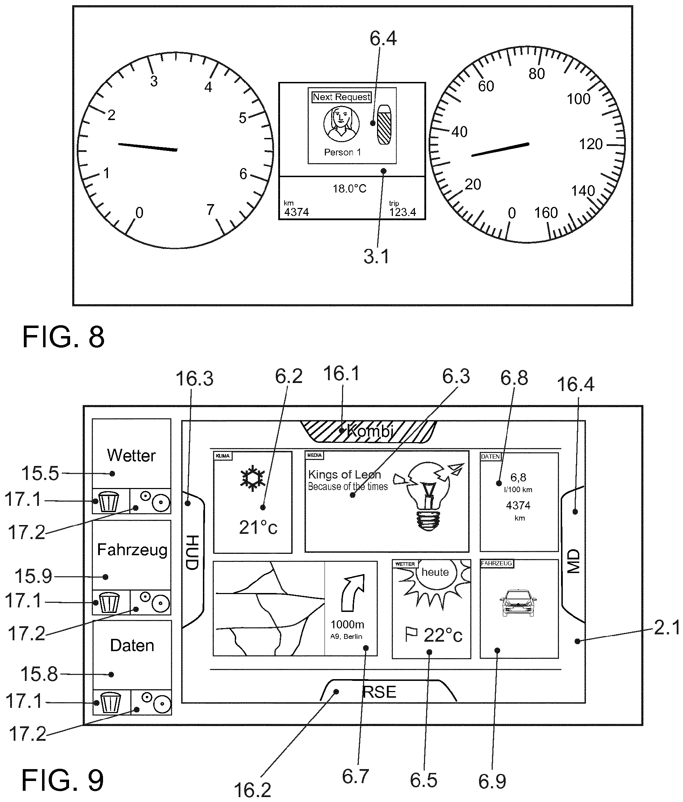

Figur 8 zeigt eine Anzeige auf der Anzeigefläche 3.1 mit dem in die Anzeige integrierten Widget-Objekt 6.4. Dabei sind die Informationen, die angezeigt werden, für den Nutzer angenehm sichtbar.

Mit Bezug zu Figur 9 wird ein Beispiel einer Anzeige auf der Anzeigefläche 2.1 gezeigt, mittels welcher die verschiedenen Homescreens der Anzeigeflächen der Benutzervorrichtungen 3, 18 und 19 konfiguriert werden können.

Dazu werden auf der Anzeigefläche 2.1 vier Bereiche 16.1 bis 16.4 angezeigt, wobei jeder Bereich 16.1 bis 16.4 einer Benutzervorrichtung 3, 18, 19 und 4 zugeordnet ist. Die Bereiche 16.1 bis 16.4 können als Schaltflächen ausgebildet sein, über welche sich die gewünschte Benutzervorrichtung 3, 18, 19 oder 4 auswählen lässt. Im vorliegenden Beispiel ist keine dritte Benutzervorrichtung 4 mit der ersten Benutzervorrichtung 2 gekoppelt. Der Bereich 16.4, der für die dritte Benutzervorrichtung 4 vorgesehen ist, wird dann beispielsweise ausgegraut dargestellt und kann nicht ausgewählt werden.

Weiterhin ist die Schaltfläche 16.1, die dem Kombinationsinstrument 3 zugeordnet ist, ausgewählt. Diese wird hervorgehoben dargestellt. Weiterhin wird auf der ersten Anzeigefläche 2.1 der ersten Benutzervorrichtung 2 der Homescreen 13 des Kombinationsinstruments 3 angezeigt. Dieser umfasst die Widget-Objekte 6.2, 6.3, 6.5, 6.7, 6.8 und 6.9.

An der linken Seite der Anzeigefläche 2.1 werden Felder 15.5, 15.8 und 15.9 angezeigt, welche den Widget-Objekten 6.5, 6.8 und 6.9 entsprechend zugeordnet sind. In den Feldern 15.5, 15.8 und 15.9 werden Schaltflächen 17.1 und 17.2 angezeigt. Betätigt der Nutzer die Schaltfläche 17.1 beispielsweise des Feldes 15.5, wird das Widget-Objekt 6.5 von dem Homescreen 13 des Kombinationsinstruments 3 entfernt. Betätigt der Nutzer die Schaltfläche 17.2 des graphischen Objekts 15.5, wird ein weiteres Fenster geöffnet, über welches der Nutzer Einstellungen zum Widget-Objekt 6.5 tätigen kann. Dabei kann er beispielsweise festlegen, welche Informationen in dem Widget-Objekt 6.5 auf der Anzeigefläche 3.1 des Kombinationsinstruments 3 angezeigt werden sollen.

Ebenso wird das Widget-Objekt 6.8 bzw. 6.9 vom Homescreen 13 des Kombinationsinstruments 3 entfernt, wenn der Nutzer die Schaltfläche 16.1 des Feldes 15.8 bzw. 15.9 betätigt. Einstellungen für die Widget-Objekte 6.8 bzw. 6.9 kann der Nutzer tätigen, wenn er die Schaltfläche 17.2 des Feldes 15.8 bzw. 15.9 betätigt.

Mit einer Wischgeste nach oben oder unten kann der Nutzer weitere Felder zur Anzeige bringen, die den Widget-Objekt 6.1 bis 6.4, und 6.6 und 6.7 zugeordnet sind. Dabei lassen sich die Widget-Objekte 6.1 bis 6.4, und 6.6 und 6.7 auf die gleiche Weise vom Homescreen entfernen oder editieren wie die Widget-Objekte 6.5, 6.8 und 6.9.

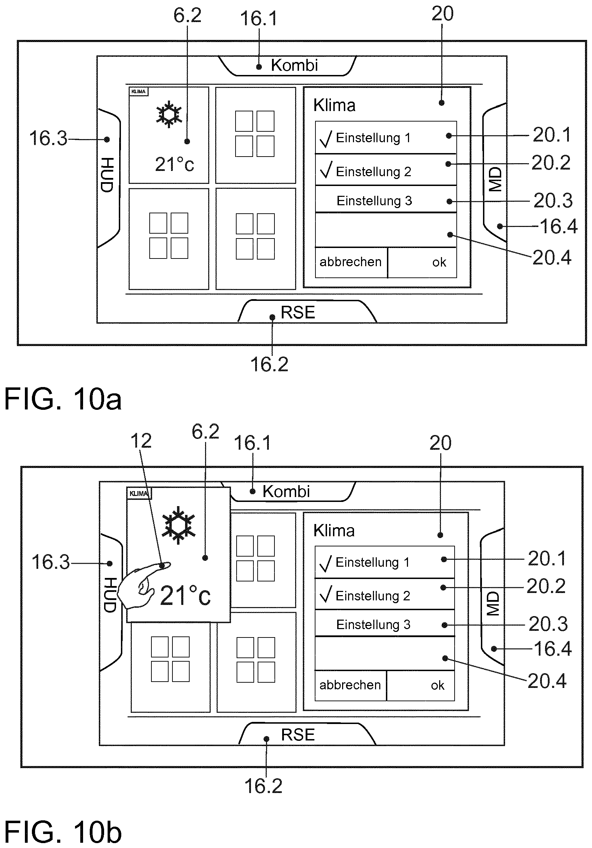

Mit Bezug zu den Figuren 10a bis 10c wird ein weiteres Ausführungsbeispiel des erfindungsgemäßen Verfahrens erläutert.

Dabei werden an den vier Seiten der Anzeigefläche 2.1 wiederum die Bereiche 16.1 bis 16.4 angezeigt, welche den Benutzervorrichtungen 3, 18 ,19 und 4 zugeordnet sind.

Weiterhin befindet sich die Anzeige auf der Anzeigefläche 2.1 in einem Editiermodus, also in einem Modus, in dem die Einstellungen für die Widget-Objekte 6.1 bis 6.9 verändert werden können. Im vorliegenden Beispiel werden die Einstellungen für das Widget-Objekt 6.2 angezeigt und können vom Nutzer editiert werden. Beispielsweise hat der Nutzer im vorherigen Beispiel dazu eine Schaltfläche 17.2 eines Feldes, welches dem Widget-Objekt 6.2 zugeordnet ist, betätigt.

Daraufhin öffnet sich ein Fenster 20, in welchem wiederum Schaltflächen 20.1 bis 20.3 sowie eine Anzeigefeld 20.4 angezeigt werden. Betätigt der Nutzer eine der Schaltflächen 20.1 bis 20.3, werden die mit der betätigten Schltfläche 20.1 bis 20.3 hinterlegten Einstellungen für das Widget-Objekt 6.2 oder die Einstellungen für die dem Widget-Objekt 6.2 zugeordneten Funktion eingestellt. Im vorliegenden Beispiel hat der Nutzer die Schaltflächen 20.1 und 20.2 betätigt. In der Anzeigefeld 20.4 werden beispielsweise Erläuterungen zu den ausgewählten Einstellungen 20.1 und 20.2 gegeben.

Wird nun einer Bedienaktion erfasst, mit der der Nutzer das Widget-Objekt 6.2 von seiner ursprünglichen Position auf eine andere Verschieben möchte, also eine Drag-and-Drop Bedienaktion, wird das Widget-Objekt 6.2 zu Beginn der Bedienaktion vergrößert dargestellt. Dies ist in Figur 10b dargestellt.

Der Nutzer verbleibt mit seiner Fingerspitze 12 auf dem Widget-Objekt 6.2 und zieht es in Richtung des Bereiches 16.1. Das Widget-Objekt 6.2 soll also zu dem Homescreen 13 des Kombinationsinstruments 3 hinzugefügt werden.

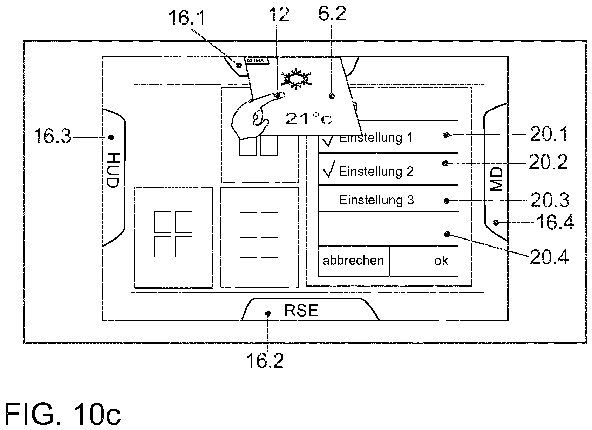

Erreicht der Nutzer mit seinem Finger den Bereich 16.1, wird das Widget-Objekt 6.2, wie in Figur 10c gezeigt, um eine Achse geschwenkt perspektivisch dargestellt. Dadurch gewinnt der Nutzer den visuellen Eindruck, dass er das Widget-Objekt 6.2 in den Bereich 16.1 hineinschiebt. Hat der Nutzer das Widget-Objekt 6.2 komplett in den Bereich 16.1 geschoben, verschwindet es von der Anzeige der Anzeigefläche 2.1.

Alternativ kann das Widget-Objekt 6.2 auch lediglich auf den Homescreen 13 des Kombinationsinstruments 3 durch die soeben beschriebene Bedienaktion kopiert werden. Das Widget-Objekt 6.2 verbleibt dann auf der Anzeigefläche 2.1 und wird lediglich auf die Anzeigefläche 3.1 kopiert.

Anstatt der perspektivischen Darstellung, kann auch eine dreidimensionale Animation zur Darstellung des Hineinschiebens des Widget-Objekts 6.2 in den Bereich 16.1 verwendet werden.

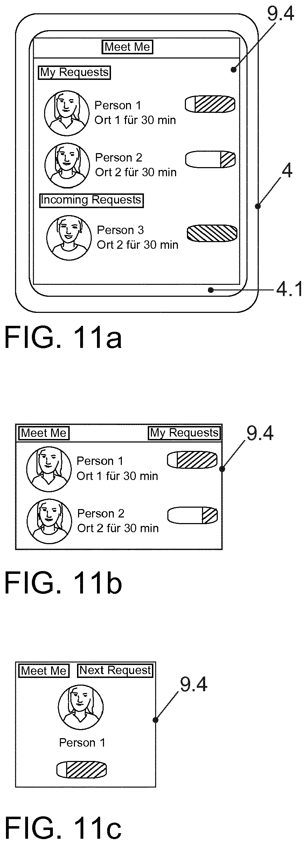

Mit Bezug zu Figuren 11a bis 11e wird ein weiteres Ausführungsbeispiel des erfindungsgemäßen Verfahrens erläutert.

Dabei wird die dritte Benutzervorrichtung 4 mit der ersten Benutzervorrichtung 2 über die Schnittstelle 10 gekoppelt. Dadurch erhält der Nutzer Zugriff auf die dritte Benutzervorrichtung 4. Der der dritten Benutzervorrichtung 4 zugeordnete Bereich 16.4 wird dann nicht mehr ausgegraut dargestellt und kann ebenso ausgewählt werden.

Wird die dritte Benutzervorrichtung 4 mit der ersten Benutzervorrichtung 2 gekoppelt, wird sie behandelt wie eine der fahrzeuginternen Benutzervorrichtungen 3, 18 und 19. Alle Bedienaktionen und Verfahren, die für eine fahrzeuginterne Benutzervorrichtung 3, 18 oder 19 möglich sind, sind dann auch für die dritte Benutzervorrichtung 4 möglich.

In Figur 11a wird eine Anzeige auf der Anzeigefläche 4.1 gezeigt, wie sie angezeigt wird, wenn der Nutzer die Anwendung "Meet Me" geöffnet hat. Die Anwendung "Meet Me" wurde, bevor sie geöffnet wurde, auf der dritte Benutzervorrichtung 4 über das Widget-Objekt 9.4 im Homescreen der dritten Benutzervorrichtung 4 angezeigt.

Nach der Kopplung der dritten Benutzervorrichtung 4 mit der ersten Benutzervorrichtung 2 wird der Homescreen der dritten Benutzervorrichtung 4 auf der Anzeigefläche 2.1 der ersten Benutzervorrichtung 2 angezeigt. Jedes der Widget-Objekte 9.1 bis 9.6 kann dann über die Verfahren, wie sie mit Bezug zu den Figuren 5 und 6 und 10a bis 10c erläutert wurden, in einen beliebigen Homescreen einer Benutzervorrichtung 2, 3, 18 oder 19 integriert werden.

In Figuren 11b und 11c sind Widget-Objekte 9.4 gezeigt, wie sie auf der Anzeigefläche 2.1 der ersten Benutzervorrichtung 2 angezeigt werden können. Diese entsprechen dabei den Ausgestaltungen des Widget-Objekts 6.4 aus den Figuren 7a und 7b. Dabei kann die Anzeige innerhalb der Widget-Objekte 9.4 durch verschiedene Bedienaktionen verändert werden. Beispielsweise kann über Wischgesten ein Bildlauf in dem Widget-Objekt 9.4 erzeugt werden. Der Bildlauf ermöglicht dann, dass weitere Einträge, die aufgrund des reduzierten Informationsgehalts des Widget-Objekts 9.4 im Homescreen der ersten Benutzervorrichtung 2 nicht angezeigt werden, nacheinander zur Anzeige gebracht werden können. Dabei kann ein vertikaler oder auch ein horizontaler Bildlauf durch Wischgesten erzeugt werden. Nach einer Integration des Widget-Objekts 9.4 in den Homescreen der ersten Bedienvorrichtung 2, kann der Homescreen beispielsweise der Homescreen sein, wie er in Figur 3 gezeigt ist.

Figur 11c zeigt ein Beispiel für eine Ausgestaltung des Widget-Objekts 9.4 für die Anzeigefläche 3.1 im Kombinationsinstrument 3. Dies entspricht dem Beispiel des Widget-Objekts 6.4 aus Figur 7c. Dabei kann das Widget-Objekt 9.4 dann über das Multifunktionslenkrad bedient werden.

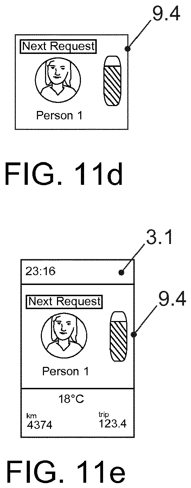

Figur 11d zeigt ein Beispiel für ein Widget-Objekt 9.4, wie es auf der Anzeigefläche 3.1 angezeigt werden kann.

In Figur 11e ist ein Beispiel für eine Anzeige auf der Anzeigefläche 3.1, wobei das Widget-Objekt 9.4 aus Figur 11d in den Homescreen 13 der Anzeigefläche 3.1 des Kombinationsinstruments 3 integriert ist.

Weiterhin kann über die Kopplung der dritten Benutzervorrichtung 4 mit der ersten Benutzervorrichtung 2 ein sogenannter Mirror-Link hergestellt werden. Dadurch kann die Funktion, welche dem Widget-Objekt 9.4 auf dem Smartphone 4 zugeordnet ist, über die erste Bedienvorrichtung 2 bedient werden. Die Funktion selbst wird dabei nicht in das Fahrzeug 7 integriert, sondern verbleibt auf der dritten Benutzervorrichtung 4. Dadurch wird es dem Nutzer ermöglicht, Funktionen, die in dem Fahrzeug 7 nicht vorhanden sind, über eine externes Gerät in das Fahrzeug 7 zu bringen und diese dort auch einfach und schnell zu bedienen, ohne vom Straßengeschehen abgelenkt zu werden.

Die vorliegende Erfindung beschreibt insbesondere ein Managementsystem, mit dem Homescreens auf verschiedenen Anzeigefläche innerhalb des Fahrzeugs 7 und auch auf Anzeigeflächen von mit dem Fahrzeug 7 gekoppelter externer Geräte konfiguriert werden können. Dabei kann jeder Fahrzeuginsasse das Verfahren ausführen.

### Bezugszeichenliste

- 1: Vorrichtung
- 2: erste Benutzervorrichtung
- 2.1: erste Anzeigefläche
- 3: zweite Benutzervorrichtung
- 3.1: zweite Anzeigefläche
- 4: dritte Benutzervorrichtung
- 4.1: dritte Anzeigefläche
- 5: Steuereinheit
- 6.1 - 6.6: graphische Objekte; Widget-Objekte
- 7: Fahrzeug
- 8: Erfassungseinheit
- 9.1 - 9.6: graphische Objekte; Widget-Objekte
- 10: Schnittstelle
- 11: Balken
- 12: Fingerspitze
- 13: Homescreen für zweite Benutzervorrichtung
- 14: zweiter Bereich
- 14.1 - 14.4: Teilbereiche des ersten Bereichs
- 15.5, 15.8, 15.9: Felder
- 16.1 - 16.4: zweite Bereiche
- 17.1, 17.2: Schaltflächen
- 18, 19: weitere Benutzervorrichtungen
- 20: Fenster
- 20.1 - 20.3: Schaltfläche
- 20.4: Anzeigefeld

## Patentansprüche

1. Verfahren zum Bereitstellen einer graphischen Benutzerschnittstelle in einem Fahrzeug (7), bei dem
zumindest ein erstes graphisches Objekt (6.1 - 6.9) in einem ersten Bereich auf einer ersten Anzeigefläche (2.1) einer ersten Benutzervorrichtung (2) angezeigt wird,
eine Bedienaktion für das erste graphische Objekt (6.1 - 6.9) erfasst wird und
nach der Bedienaktion das erste graphische Objekt (6.1 - 6.9) auf einer zweiten Anzeigefläche (3.1) angezeigt wird, wobei die zweite Anzeigefläche (3.1) einer zweiten Benutzervorrichtung (3) zugeordnet ist,
**dadurch gekennzeichnet, dass**
mit der Bedienaktion das erste graphische Objekt (6.1 - 6.9) mit einem zweiten Bereich (14, 16.1 - 16.4) der ersten Anzeigefläche (2.1) verknüpft wird, indem das erste graphische Objekt (6.1 - 6.9) vom ersten Bereich auf der ersten Anzeigefläche (2.1) in den zweiten Bereich (14, 16.1 - 16.4) der ersten Anzeigefläche (2.1) verschoben wird,
wobei der zweite Bereich (14, 16.1 - 16.4) der ersten Anzeigefläche (2.1) der zweiten Anzeigefläche (3.1) der zweiten Benutzervorrichtung (3) zugeordnet ist, und wobei der zweite Bereich (14, 16.1 - 16.4) graphisch dargestellt wird, wenn die Bedienaktion erfasst wird.

2. Verfahren nach Anspruch 1, **dadurch gekennzeichnet, dass,**
wenn die Bedienaktion erfasst wird, ein zweites graphisches Objekt (6.3') auf der ersten Anzeigefläche (2.1) angezeigt wird, welches das erste graphische Objekt (6.3) repräsentiert und welches durch die Bedienaktion in den zweiten Bereich (14, 16.1 - 16.4) verschoben wird, während das erste graphische Objekt (6.3) seine ursprüngliche Position auf der ersten Anzeigefläche (2.1) beibehält, und
das erste graphische Objekt (6.3) nach der Bedienaktion auf der ersten (2.1) und der zweiten Anzeigefläche (3.1) angezeigt wird.

3. Verfahren nach Anspruch 1 ,
**dadurch gekennzeichnet, dass**
das erste graphische Objekt (6.1 - 6.9) dadurch mit dem zweiten Bereich (14, 16.1 - 16.4) verknüpft wird, dass es von seiner ursprünglichen Position auf der ersten Anzeigefläche (2.1) in den zweiten Bereich (14, 16.1 - 16.4) verschoben wird, wobei es nach der Bedienaktion nicht mehr auf der ersten Anzeigefläche (2.1) angezeigt wird.

4. Verfahren nach einem der vorhergehenden Ansprüche,
**dadurch gekennzeichnet, dass**
das erste graphische Objekt (6.1 - 6.9) auf der ersten Anzeigefläche (2.1) in einem ersten Anzeigemodus und auf der zweiten Anzeigefläche (3.1) in einem zweiten Anzeigemodus angezeigt wird.

5. Verfahren nach Anspruch 4,
**dadurch gekennzeichnet, dass**
das erste graphische Objekt (6.1 - 6.9) ein Widget-Objekt ist, in welchem Informationen zu einer Fahrzeugfunktion angezeigt werden, wobei das Widget-Objekt im zweiten Anzeigemodus weniger Informationen zu der Fahrzeugfunktion aufweist als im ersten Anzeigemodus.

6. Verfahren nach einem der vorhergehenden Ansprüche,
**dadurch gekennzeichnet, dass**
das erste graphische Objekt (6.1 - 6.9) ein Anzeige- und/oder Bedienelement einer Hauptanzeige der ersten Anzeigefläche (2.1) ist, die angezeigt wird, wenn das Fahrzeug (7) gestartet wird.

7. Verfahren nach einem der vorhergehenden Ansprüche,
**dadurch gekennzeichnet, dass**
eine dritte Benutzervorrichtung (4) mit der ersten Benutzervorrichtung (2) gekoppelt wird, wobei die dritte Benutzervorrichtung (4) eine dritte Anzeigefläche (4.1) aufweist, auf der zumindest ein weiteres graphisches Objekt (9.1 - 9.6) angezeigt wird,
das weitere graphische Objekt (9.1 - 9.6) auf der ersten Anzeigefläche (2.1) angezeigt wird, nachdem die dritte Benutzervorrichtung (4) mit der ersten Benutzervorrichtung (2) gekoppelt wurde,
das weitere graphische Objekt (9.1 - 9.6) durch die Bedienaktion mit dem zweiten Bereich (14,16.1 - 16.3) verknüpft wird und
das weitere graphische Objekt (9.1 - 9.6) nach der Bedienaktion auf der zweiten Anzeigefläche (3.1) angezeigt wird.

8. Verfahren nach Anspruch 7,
**dadurch gekennzeichnet, dass**
das weitere graphische Objekt (9.1 - 9.6) einer Funktion der dritten Benutzervorrichtung (4) zugeordnet ist, wobei die Funktion über das weitere graphische Objekt (9.1 - 9.6) auf der ersten Anzeigefläche (2.1) bedient wird.

9. Verfahren nach Anspruch 7 oder 8,
**dadurch gekennzeichnet, dass**
das weitere graphische Objekt (9.1 - 9.6) auf der ersten Anzeigefläche (2.1) in dem ersten Anzeigemodus, auf der zweiten Anzeigefläche (3.1) in dem zweiten Anzeigemodus und auf der dritten Anzeigefläche (4.1) in einem dritten Anzeigemodus angezeigt wird, wobei der erste, zweite und dritte Anzeigemodus über die erste Anzeigefläche (2.1) konfiguriert werden.

10. Vorrichtung (1) zum Bereitstellen einer graphischen Benutzerschnittstelle in einem Fahrzeug (7), mit
einer ersten Benutzervorrichtung (2) mit einer ersten Anzeigefläche (2.1), auf welcher in einem ersten Bereich zumindest ein erstes graphisches Objekt (6.1 - 6.9) angezeigt wird,
einer zweiten Benutzervorrichtung (3) mit einer zweiten Anzeigefläche (3.1),
einer Erfassungseinheit (8), die der ersten Anzeigefläche (2.1) zugeordnet ist und mittels welcher eine Bedienaktion für das erste graphische Objekt (6.1 - 6.9) erfasst wird, und
einer Steuereinheit (5), die der ersten Benutzervorrichtung (2) zugeordnet ist und mittels welcher die zweite Anzeigefläche (3.1) derart ansteuerbar ist, dass das erste graphische Objekt (6.1 - 6.9) nach der Bedienaktion auf der zweiten Anzeigefläche (3.1) angezeigt wird,
**dadurch gekennzeichnet, dass**
mit der Bedienaktion das erste graphische Objekt (6.1 - 6.9) mit einem zweiten Bereich (14, 16.1 - 16.4) der ersten Anzeigefläche (2.1) verknüpft wird, indem das erste graphische Objekt (6.1 - 6.9) vom ersten Bereich auf der ersten Anzeigefläche (2.1) in den zweiten Bereich (14, 16.1 - 16.4) der ersten Anzeigefläche (2.1) verschoben wird, wobei der zweite Bereich (14, 16.1 - 16.4) der ersten Anzeigefläche (2.1) der zweiten Anzeigefläche (3.1) der zweiten Benutzervorrichtung (3) zugeordnet ist, und wobei
der zweite Bereich (14, 16.1 - 16.4) graphisch dargestellt wird, wenn die Bedienaktion erfasst wird.

11. Vorrichtung (1) nach Anspruch 10,
**dadurch gekennzeichnet, dass**
die Vorrichtung (1) weitere Benutzervorrichtungen (18, 19) umfasst, wobei auf der ersten Anzeigefläche (2.1) für jede Benutzervorrichtung (3, 18, 19) ein Bereich (16.1 - 16.3) anzeigbar ist, wobei das erste graphische Objekt (6.1 - 6.9) durch die Bedienaktion mit jedem Bereich (16.1 - 16.3) verknüpfbar ist.

12. Vorrichtung (1) nach Anspruch 10 oder 11,
**dadurch gekennzeichnet, dass**
die Vorrichtung (1) eine Schnittstelle (10) umfasst, mittels welcher eine dritte Benutzervorrichtung (4) mit der Vorrichtung (1) koppelbar ist, wobei der ersten Anzeigefläche (2.1) über die dritte Benutzervorrichtung (4) zumindest ein weiteres graphisches Objekt (9.1 - 9.6) bereitstellbar ist.

13. Vorrichtung (1) nach Anspruch 10, 11 oder 12,
**dadurch gekennzeichnet, dass**
die Erfassungseinheit (8) eine berührungsempfindliche Oberfläche umfasst, welche auf der ersten Anzeigefläche (2.1) angeordnet ist.

14. Fahrzeug (7) mit einer Vorrichtung (1) nach einem der Ansprüche 10 bis 13.

## Claims

1. Method for providing a graphical user interface in a vehicle (7), in which
at least a first graphical object (6.1 - 6.9) is displayed in a first area on a first display panel (2.1) of a first user apparatus (2),
an operator control action is detected for the first graphical object (6.1 - 6.9), and
the operator control action is followed by the first graphical object (6.1 - 6.9) being displayed on a second display panel (3.1), the second display panel (3.1) being associated with a second user apparatus (3),
**characterized in that**
the operator control action links the first graphical object (6.1 - 6.9) to a second area (14, 16.1 - 16.4) of the first display panel (2.1) by virtue of the first graphical object (6.1 - 6.9) being moved from the first area on the first display panel (2.1) to the second area (14, 16.1 - 16.4) of the first display panel (2.1),
wherein the second area (14, 16.1 - 16.4) of the first display panel (2.1) is associated with the second display panel (3.1) of the second user apparatus (3), and wherein the second area (14, 16.1 - 16.4) is graphically presented when the operator control action is detected.

2. Method according to Claim 1,
**characterized in that**
when the operator control action is detected a second graphical object (6.3') is displayed on the first display panel (2.1), which second graphical object represents the first graphical object (6.3) and is moved to the second area (14, 16.1 - 16.4) by the operator control action, while the first graphical object (6.3) maintains its original position on the first display panel (2.1), and the first graphical object (6.3) is displayed on the first (2.1) and the second (3.1) display panel after the operator control action.

3. Method according to Claim 1,
**characterized in that**
the first graphical object (6.1 - 6.9) is linked to the second area (14, 16.1 - 16.4) by being moved from its original position on the first display panel (2.1) to the second area (14, 16.1 - 16.4), wherein it is no longer displayed on the first display panel (2.1) after the operator control action.

4. Method according to one of the preceding claims, **characterized in that**
the first graphical object (6.1 - 6.9) is displayed on the first display panel (2.1) in a first display mode and on the second display panel (3.1) in a second display mode.

5. Method according to Claim 4,
**characterized in that**
the first graphical object (6.1 - 6.9) is a widget object in which information pertaining to a vehicle function is displayed, wherein the widget object has less information pertaining to the vehicle function in the second display mode than in the first display mode.

6. Method according to one of the preceding claims, **characterized in that**
the first graphical object (6.1 - 6.9) is a display and/or operator control element of a main display of the first display panel (2.1) that is displayed when the vehicle (7) is started.

7. Method according to one of the preceding claims, **characterized in that**
a third user apparatus (4) is coupled to the first user apparatus (2), wherein the third user apparatus (4) has a third display panel (4.1) on which at least a further graphical object (9.1 - 9.6) is displayed,
the further graphical object (9.1 - 9.6) is displayed on the first display panel (2.1) after the third user apparatus (4) has been coupled to the first user apparatus (2),
the further graphical object (9.1 - 9.6) is linked to the second area (14, 16.1 - 16.3) by the operator control action, and
the further graphical object (9.1 - 9.6) is displayed on the second display panel (3.1) after the operator control action.

8. Method according to Claim 7,
**characterized in that**
the further graphical object (9.1 - 9.6) is associated with a function of the third user apparatus (4), wherein the function is controlled by means of the further graphical object (9.1 - 9.6) on the first display panel (2.1) .

9. Method according to Claim 7 or 8,
**characterized in that**
the further graphical object (9.1 - 9.6) is displayed on the first display panel (2.1) in the first display mode, on the second display panel (3.1) in the second display mode and on the third display panel (4.1) in a third display mode, wherein the first, second and third display modes are configured by means of the first display panel (2.1) .

10. Apparatus (1) for providing a graphical user interface in a vehicle (7), having
a first user apparatus (2) having a first display panel (2.1) on which at least a first graphical object (6.1 - 6.9) is displayed in a first area,
a second user apparatus (3) having a second display panel (3.1),
a detection unit (8) that is associated with the first display panel (2.1) and by means of which an operator control action is detected for the first graphical object (6.1 - 6.9), and
a control unit (5) that is associated with the first user apparatus (2) and by means of which the second display panel (3.1) is actuatable such that the first graphical object (6.1 - 6.9) is displayed on the second display panel (3.1) after the operator control action, **characterized in that**
the operator control action is used to link the first graphical object (6.1 - 6.9) to a second area (14, 16.1 - 16.4) of the first display panel (2.1) by virtue of the first graphical object (6.1 - 6.9) being moved from the first area on the first display panel (2.1) to the second area (14, 16.1 - 16.4) of the first display panel (2.1), wherein the second area (14, 16.1 - 16.4) of the first display panel (2.1) is associated with the second display panel (3.1) of the second user apparatus (3), and wherein the second area (14, 16.1 - 16.4) is graphically presented when the operator control action is detected.

11. Apparatus (1) according to Claim 10,
**characterized in that**
the apparatus (1) comprises further user apparatuses (18, 19), wherein an area (16.1 - 16.3) is displayable on the first display panel (2.1) for each user apparatus (3, 18, 19), the first graphical object (6.1 - 6.9) being linkable to each area (16.1 - 16.3) by the operator control action.

12. Apparatus (1) according to Claim 10 or 11, **characterized in that**
the apparatus (1) comprises an interface (10) by means of which a third user apparatus (4) is couplable to the apparatus (1), wherein at least one further graphical object (9.1 - 9.6) is providable to the first display panel (2.1) by means of the third user apparatus (4).

13. Apparatus (1) according to Claim 10, 11 or 12, **characterized in that**
the detection unit (8) comprises a touch-sensitive surface arranged on the first display panel (2.1).

14. Vehicle (7) having an apparatus (1) according to one of Claims 10 to 13.

## Revendications

1. Procédé destiné à fournir une interface utilisateur graphique dans un véhicule (7), dans lequel au moins un premier objet graphique (6.1 - 6.9) est affiché dans une première zone sur une première surface d'affichage (2.1) d'un premier dispositif utilisateur (2),
une action de commande est détectée sur le premier objet graphique (6.1 - 6.9) et,
après l'action de commande, le premier objet graphique (6.1 - 6.9) est affiché sur une deuxième surface d'affichage (3.1), dans lequel la deuxième zone d'affichage (3.1) est associée à un deuxième dispositif utilisateur (3),
caractérisé le premier objet graphique (6.1 - 6.9) est combiné à une deuxième zone (14, 16.1 - 16.4) de la première surface d'affichage (2.1) du fait de l'action de commande en déplaçant le premier objet graphique (6.1 - 6.9) de la première zone sur la première surface d'affichage (2.1) vers la deuxième zone (14, 16.1 - 16.4) de la première surface d'affichage (2.1),
dans lequel la deuxième zone (14, 16.1 - 16.4) de la première surface d'affichage (2.1) est associée à la deuxième surface d'affichage (3.1) du deuxième dispositif utilisateur (3), et dans lequel la deuxième zone (14, 16.1 - 16.4) est représentée graphiquement lorsque l'action de commande est détectée.

2. Procédé selon la revendication 1, **caractérisé en ce que**, lorsque l'action de commande est détectée, un deuxième objet graphique (6.3') est affiché sur la première surface d'affichage (2.1), celui-ci représentant le premier objet graphique (6.3) et étant décalé vers la deuxième zone (14, 16.1 - 16.4) du fait de l'action de commande, tandis que le premier objet graphique (6.3) conserve sa position initiale sur la première surface d'affichage (2.1), et
le premier objet graphique (6.3) est affiché sur la première (2.1) et la deuxième surface d'affichage (3.1) après l'action de commande.

3. Procédé selon la revendication 1, **caractérisé en ce que** le premier objet graphique (6.1 - 6.9) est associé à la deuxième zone (14, 16.1 - 16.4), **en ce qu'**il est décalé de sa position initiale sur la première surface d'affichage (2.1) vers la deuxième zone (14, 16.1 - 16.4), de sorte qu'il n'est plus affiché dans la première zone d'affichage (2.1) après l'action de commande.

4. Procédé selon l'une des revendications précédentes, **caractérisé en ce que** le premier objet graphique (6.1 - 6.9) est affiché sur la première surface d'affichage (2.1) dans un premier mode d'affichage et sur la deuxième surface d'affichage (3.1) dans un deuxième mode d'affichage.

5. Procédé selon la revendication 4, **caractérisé en ce que** le premier objet graphique (6.1 - 6.9) est un objet widget dans lequel sont affichées des informations concernant une fonction du véhicule, dans lequel l'objet widget comporte moins d'informations concernant la fonction du véhicule dans le deuxième mode d'affichage que dans le premier mode d'affichage.

6. Procédé selon l'une des revendications précédentes, **caractérisé en ce que** le premier objet graphique (6.1 - 6.9) est un élément d'affichage et/ou de commande d'un affichage principal de la première zone d'affichage (2.1), qui est affiché lorsque le véhicule (7) est démarré.

7. Procédé selon l'une des revendications précédentes, **caractérisé en ce qu'**un troisième dispositif utilisateur (4) est couplé au premier dispositif utilisateur (2), dans lequel le troisième dispositif utilisateur (4) comporte une troisième zone d'affichage (4.1) sur laquelle est affiché au moins un autre objet graphique (9.1 - 9.6),
l'autre objet graphique (9.1 - 9.6) est affiché sur la première surface d'affichage (2.1) après que le troisième dispositif utilisateur (4) a été couplé au premier dispositif utilisateur (2),
l'autre objet graphique (9.1 - 9.6) est combiné à la deuxième zone (14, 16.1 - 16.3) du fait de l'action de commande et
l'autre objet graphique (9.1 - 9.6) est affiché sur la deuxième zone de visualisation (3.1) après l'action de commande.

8. Procédé selon la revendication 7, **caractérisé en ce que** l'autre objet graphique (9.1 - 9.6) est associé à une fonction du troisième dispositif utilisateur (4), dans lequel la fonction est commandée par l'intermédiaire de l'autre objet graphique (9.1 - 9.6) sur la première surface d'affichage (2.1).

9. Procédé selon la revendication 7 ou 8, **caractérisé en ce que** l'autre objet graphique (9.1 - 9.6) est affiché sur la première surface d'affichage (2.1) dans le premier mode d'affichage, sur la deuxième surface d'affichage (3.1) dans le deuxième mode d'affichage et sur la troisième surface d'affichage (4.1) dans un troisième mode d'affichage, dans lequel les premier, deuxième et troisième modes d'affichage sont configurés par l'intermédiaire de la première zone d'affichage (2.1) .

10. Dispositif (1) destiné à fournir une interface utilisateur graphique dans un véhicule (7), comprenant un premier dispositif utilisateur (2) présentant une première zone d'affichage (2.1) sur laquelle au moins un premier objet graphique (6.1 - 6.9) est affiché dans une première zone,
un deuxième dispositif utilisateur (3) présentant une deuxième surface d'affichage (3.1),
une unité de détection (8) qui est associée à la première zone d'affichage (2.1) et au moyen de laquelle une action de commande concernant le premier objet graphique (6.1 - 6.9) est détectée, et
une unité de commande (5) qui est associée au premier dispositif utilisateur (2) et au moyen de laquelle la deuxième zone d'affichage (3.1) peut être commandée de manière à ce que le premier objet graphique (6.1 - 6.9) soit affiché sur la deuxième zone d'affichage (3.1) après l'action de commande,
**caractérisé en ce que** le premier objet graphique (6.1 - 6.9) est combiné à une deuxième région (14, 16.1 - 16.4) de la première zone d'affichage (2.1) du fait de l'action de commande, en décalant le premier objet graphique (6.1 - 6.9) de la première région de la première zone d'affichage (2.1) vers la deuxième région (14, 16.1 - 16.4) de la première zone d'affichage (2.1), dans lequel la deuxième zone (14, 16.1 - 16.4) de la première surface d'affichage (2.1) est associée à la deuxième surface d'affichage (3.1) du deuxième dispositif utilisateur (3), et dans lequel la deuxième zone (14, 16.1 - 16.4) est représentée graphiquement lorsque l'action de commande est détectée.

11. Dispositif (1) selon la revendication 10, **caractérisé en ce que** le dispositif (1) comprend d'autres dispositifs utilisateurs (18, 19), dans lequel une zone (16.1 - 16.3) peut être affichée sur la première surface d'affichage (2.1) pour chaque dispositif utilisateur (3, 18, 19), dans lequel le premier objet graphique (6.1 - 6.9) peut être combiné à chaque zone (16.1 - 16.3) par l'action de commande.

12. Dispositif (1) selon la revendication 10 ou 11, **caractérisé en ce que** le dispositif (1) comprend une interface (10) au moyen de laquelle un troisième dispositif utilisateur (4) peut être couplé au dispositif (1), dans lequel au moins un autre objet graphique (9.1 - 9.6) peut être fourni à la première zone d'affichage (2.1) par l'intermédiaire du troisième dispositif utilisateur (4).

13. Dispositif (1) selon la revendication 10, 11 ou 12, **caractérisé en ce que** l'unité de détection (8) comprend une surface tactile qui est disposée sur la première surface d'affichage (2.1).

14. Véhicule (7) comportant un dispositif (1) selon l'une des revendications 10 à 13.
